**Europäisches Patentamt**

**European Patent Office**

**Office européen des brevets**

(19)

(11) Publication number : **0 527 103 A2**

# (12) EUROPEAN PATENT APPLICATION

(21) Application number : **92500102.6**

(22) Date of filing : **03.08.92**

(51) Int. Cl.⁵ : **B23Q 17/00,** G05B 19/405

(30) Priority : **06.08.91 ES 9101839**

(43) Date of publication of application :
**10.02.93 Bulletin 93/06**

(84) Designated Contracting States :
**CH DE FR IT LI**

(71) Applicant : **FAGOR, S.COOP. LTDA.**
**B. San Andrés, s/n**
**E-20500 Mondragon (Guipuzcoa) (ES)**

(72) Inventor : **Onandia Garro, Josu**
**Paseo Arrasate, 12 - 1o**
**Mondragon (Guip zcoa) (ES)**
Inventor : **Rodriguez de Yurre, Juan Carlos**
**Francia, 9 - 5o D.**
**Vitoria (ES)**
Inventor : **Novo del Val, Marcelino**
**Federico Baraibar, 1 - 3o Izqd.**
**Vitoria (ES)**

(74) Representative : **Carpintero Lopez, Francisco**
**HERRERO & ASOCIADOS, S.L. Alcalá, 21**
**E-28014 Madrid (ES)**

(54) **System for the graphic display of lathe machined work.**

(57)    Such uses the profile interpolation technique determined from two points $P_1$, $P_2$ obtained by sampling the spatial X, Z and angular S position of the tool tip, points $P_a$, $P_b$ making up two upper (A) and lower (B) profiles, and superposing at such points $P_a$, $P_b$ the profile of the part (MP) and of the tool (MC) to provide real information of the contour obtained in the machining process.

The system is independent of the kind of graphic display used, and can be incorporated to numerical controls provided to a display screen or conveniently to computer aided design (CAD) systems to aid programming at a stage prior to actual machining.

FIG.-1

EP 0 527 103 A2

## OBJECT OF THE INVENTION

The object of the patent is a system for the graphic display of parts machined by machine tools with a rotating drive, such as a lathe. The novelty of the system lies in the provision of real information of the contour of the machined part to allow the display of asymmetric forms, namely a threading. It also allows the visual display of an unwanted threading due to an excessive forward speed of the tool and also a slight roughness indicating the quality of the surface finish.

The system is independent of the graphic display used, is applicable to both line graphics and solid graphics and can be incorporated not only to numerical controls governing machine-tools of the said kind but conveniently to computer aided design (CAD) systems to detect possible errors in the machine-tool's control programs, prior to machining as such, which would lead to machining faults, such as the said unwanted threadings or the deficient quality of the surface finish of the machined part. This yields a significant savings in the time spent in the preparatory stages of the actual machining of the part and of the material used in tests.

## BACKGROUND OF THE INVENTION

It is a usual practice in the graphic display of machined work, whether in the numerical control of a machine-tool with a rotating drive such as a lathe, or a work station with computer aided design (CAD) programs, to take samples at fixed time intervals of the position of the cutter, each such sample defining a two-dimensional point, with coordinates X, Z of the tool tip, which points are displayed on a screen.

When the display system used is line graphics, the two-dimensional points obtained by sampling are joined by means of a straight segment that simulates the profile obtained. When the display system used is solid graphics, the portion of the part comprised between every two consecutive points relative to the position of the tip of the machine is deemed as "consumed", the whole area being cleared from the screen. A specific embodiment of this system is set forth in European patent publication number 0129091 where the template simulating the part to machine and the simplified template of the tool are superposed to specify the area in which both templates interfere by determining four points relative to a first position of the tool, a first cutting poistion, a second tool position and a second cutting point, the latter points taken after the tool template has been moved, clearing the area of interference of the template from the working part.

Both display systems fulfil the basic function of providing graphics simulating the changing form of a working part that is to be or is being machined. However, the use thereof has a number of drawbacks when the working part is being machined for the formation of say a thread, inasmuch as the thread profiles are shown as a straight line or at best are replaced by predefined cog-like sectors symbolising the threading, but containing no real information on the execution thereof. Another drawback of these diplay systems, perchance graver than the above, is that one cannot distinguish when the poor programming of the forward speed of the tool cutter causes the profile of the machined part to resemble a threading, when such was not expected.

## DESCRIPTION OF THE INVENTION

The object of this invention is to overcome the drawbacks of the above systems. To such end a template is established of the working part to be displayed on a plane containing the main spin axis of the said part, which allows two profiles or contours to be defined, an upper and a lower one. The system comprises taking samples of the position of the tool over a given time interval to obtain sampling points containing information of not only the spatial position but also the angular position thereof about the main spin axis of the machine. Once the sampling points are known, the system calculates the coordinates of the points corresponding to the two profiles to be displayed and relative to the measurement interval.

The modifications to the profiles due to the machining process, defined by the variations of the coordinates of the points representing such profiles, are displayed by clearing the area in which the working part template and the machining tool template interfere, which contains real information on the specific form of each machine used in the machining process. The interference areas between both templates are determined for each point representing the profiles and not by scanning between both consecutive points, so that the said areas have the real form of the "biting" of the tool.

The display on screen of the interference areas discretely and not by scanning allows an easy detection of when an excessive forward speed of the tool has been programmed, for if the said tool moves forward very quickly, unremoved material areas shall appear between both profile points, clearly visible on screen as an uneven profile corresponding to an unwanted thread form. Similarly, information can be obtained as to the roughness of the surface finish of each step of the machining process, which shall depend both upon the size and shape of the tool and the speed of the various axes.

## DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

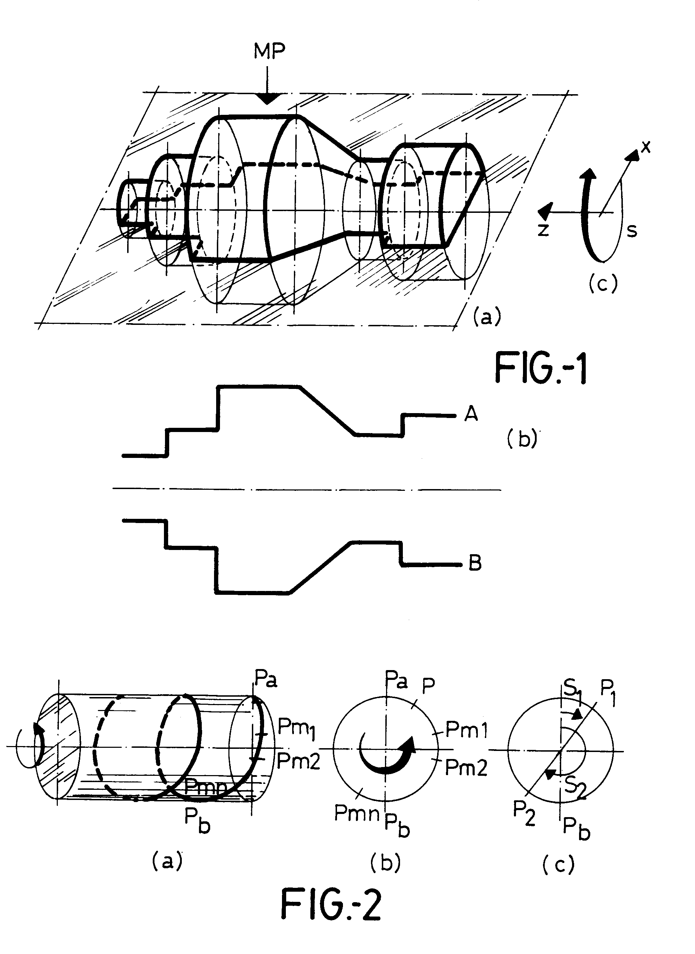

Figure 1.- Is a diagrammatic view:

a). Of the intersection of the part to machine with the display plane.

b). Of the upper and lower profiles obtained at the intersection of figure 1.

c). Of the reference system for the sampling points.

Figure 2.- Is:

a). A perspective view of the sampling process to determine the position of the tool tip.

b). A transverse projection of the sampling points of figure 2.

c). An example of the sampling points used in the profile interpolation technique to calculate a lower profile point.

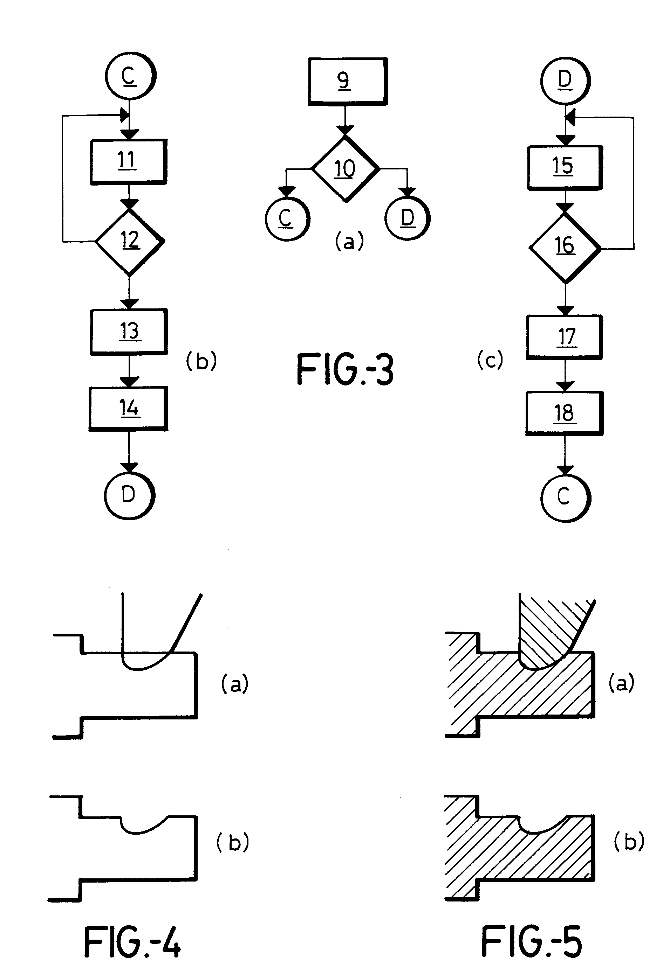

Figure 3.- Is a simplified flow diagram of:

a). The setting of the procedure to show on the visual display the points representing the true profiles of the machined part.

b). The portion of the procedure to show on the visual display the points representing the lower profile of the machining part.

c). The portion of the procedure to show on the visual display the points making up the upper profile of the machining part.

Figure 4.- Are illustrative examples of the process to modify the profile when the graphic display system is a line system, showing:

a). The superposition of the machining part and tool templates.

b). The new form acquired by the profile.

Figure 5.- Are illustrative examples of the process to modify the profile when the graphic display system is a solid graphics system, showing:

a). The superposition of the machining part and tool templates.

b). The new form acquired by the profile.

Figure 6.- Are illustrative examples of the final profiles obtained by using:

a). The scanning graphic display procedure as described in the art.

b). The system graphic display procedure for a first kind of machining cutter.

c). The same procedure of the above figure, using a second kind of machining cutter and with a slower forward speed.

## PREFERRED EMBODIMENT OF THE INVENTION

The system of the invention uses the profile interpolation technique. This technique is generic and valid for any kind of graphic display of a system with a main spin axis, such as a lathe. Figure 1 shows the basic idea of the technique which comprises drawing two profiles on the display screen, an upper (A) and a lower (B) screen, figure 1b, obtained by means of a longitudinal section in a plane containing the main spin axis of the part to machine (MP), figure 1. Thus an origin is determined to measure the angular position of the main spin axis, establishing a reference system (X, Z, S) where Z is the main spin axis that with X indicate the spatial position of any given point and S is the angular position thereof, figure 1.c).

After determining the initial angular position, the display system takes a sample of points $P_{m1}$, $P_{m2}$, ... $P_{mn}$, relative to the position of the tip of the machining tool, as illustrated in figures 2 a and b. From the known sequence of such points, points $P_a$ and $P_b$ respectively for the upper profile (A) and lower profile (B) points are calculated. This calculation is carried out by means of a simple interpolation process. For instance, and with regard to figure 2c, the intermediate point $P_b$ is obtained from points $P_1$ of coordinates $(x_1, z_1, s_1)$ and $P_2$ of coordinates $(x_2, z_2, s_2)$ using:

$$x = x_1 + \frac{x_2 - x_1}{s_2 - s_1}(s - s_1),$$

$$\dots \quad (1)$$

$$z = z_1 + \frac{z_2 - z_1}{s_2 - s_1}(s - s_1).$$

The equations system (1) is equally valid for a point $P_a$ of the upper profile and for a point $P_b$ of the lower profile. Given that these points $P_a$, $P_b$ are on the display plane, their angular coordinates will always be $s_a = 0°$ and $s_b = 180°$ respectively.

The procedure for the graphic display of the machined work can be followed in greater detail in figures 3. In figure 3a, to set the procedure, step (9) of the system executes a sampling of an initial point $P_1$ of coordinates $(x_1, z_1, s_1)$. The angular coordinate $s_1$ of this point $P_1$ is then compared at step (10) to determine whether its value is above or below 180° and continue the procedure at point (C) of figure 3b or at point (D) of figure 3c, as appropriate. For the rest of the specification, let us assume that the angular coordinate $s_1$ at starting point $P_1$ is below 180°, wherefore the process description continues at point (C) of figure 3b, in the understanding that it could similarly continue at point (D) of figure 3c, without this entailing a substantial change in the description of the invention.

The following step numbered (11) in figure 3b involves taking the sampling at the position $P_2$ $(x_2, z_2, s_2)$ at which the tip of the tool used in machining is located, thereafter, at step (12) to determine whether its angular position coordinate, $s_2$, is above the value of 180°. Otherwise the process returns to step (11) executing the sampling at a new point.

When the angular coordinate $s_2$ at sampling point $P_2$ exceeds the value of 180°, the process applies the profile interpolation technique using $P_1$ determined at step (10) as the starting point and $P_2$ as the end point, determining by means of equations (1) the spatial coordinates, $x_b$, $z_b$ for the first point of the new lower profile (B). At this step (13) it is also established that the new starting point from which the profile interpolation shall continue to be applied shall be the end sampling point $P_2$.

After determining the position of $P_b$ at step (14) the "bite" is drawn on screen. If the graphic display system is a line system, the profile and tool templates are superposed, figure 4a, replacing the profile sector of the part comprised between the points of intersection of both profiles with the relevant profile sector of the tool, as shown in figure 4b. If the graphic display system is a solid system, the common area of both solids simulating the part and the tool is deemed as "consumed" and the screen points contained in such area are cleared to obtain as a result the profile change shown in figures 5a and b.

The procedure continues at point (D) of figure 3c with a new sampling step (11) described above to obtain a new point $P_2$ and determine whether the angular position coordinate thereof has in this case exceeded the value of 360° step (16), determining at step (17) the spatial coordinates $x_a$, $z_a$ at a point $P_a$, this time for the new upper profile (A), and taking point $P_2$ as the new starting point. The angular position coordinate, $s_1$, at this new starting point is reset taking away 360° from the coordinate obtained in the sampling ($s_1 = s_2$ - 360°).

At step (18), similarly to step (14), the profile is updated, in this case the upper profile (A) and the whole procedure is repeated from step (11) point (C) in figure 3b as many times as necessary, obtaining new points that in all make up the true, and not necessarily symmetrical, profile of the machined part.

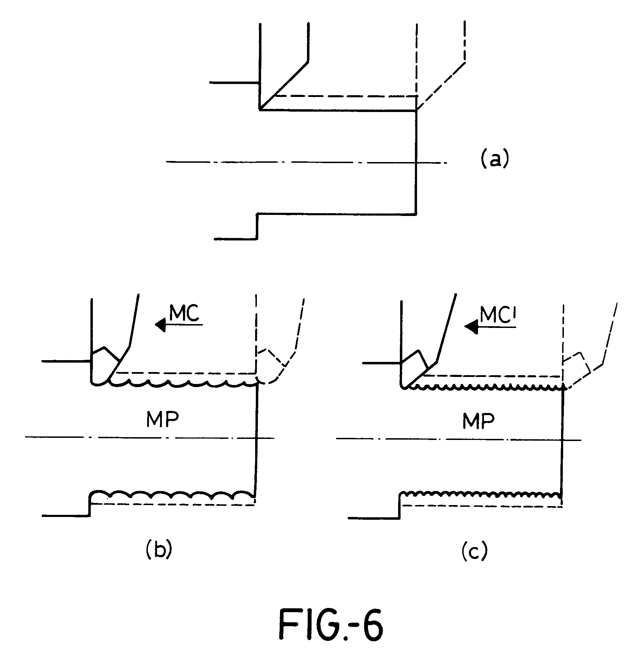

The result obtained using the subject system can be seen in figures 6 a-c. Figures 6b and 6c show the form of the profile viewed on the display, at successive machining stages, using different kinds of cutters (MC, MC'). Such profiles clearly show the crests of unremoved material due to an excessive forward speed of the cutter. Figure 6a shows the profile that would be obtained applying a procedure as described in the art.

This system for the graphic display of lathe machined work can be incorporated to the machine's numerical control. Another convenient use is its application in computer aided design (CAD) systems, allowing the detection, even at a simulation stage prior to machining, of possible errors in the data of the machine-tool control programs regarding forward speed of the various axes, which errors would lead to faults in the machining finish or breaking of the cutter used.

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

1.- A system for the graphic display of lathe machined work, that can be incorporated to the numerical control of machine-tools or applied to computer aided design stations to aid the programming of the actual numerical control at a stage prior to true machining, wherein the template of the part to machine (MP) is longitudinally cut on a display plane, which plane contains the machine's spin axis, to obtain two profiles to display, an upper profile (A), comprising points $P_a$, and a lower profile (B), of points $P_b$, and to establish a reference system wherein, in addition to the spatial coordinates X, Z of the tool tip, a third coordinate S measures the angular position thereof to the display plane, essentially characterised in that points $P_a$, $P_b$ making up the upper (A) and lower (B) profiles on the display screen are determined by means of the profile interpolation technique from points $P_1$, $P_2$ obtained by means of sampling points $P_{m1}$, $P_{m2}$, ... $P_{mn}$ of the position of the tool tip, every time the angular position of such tip exceeds a value of 180° or 360° alternatively, such that the end point $P_2$ of each interpolation becomes the starting point $P_1$ of the next one.

2.- A system for the graphic display of lathe machined work, as in claim 1, characterised in that both upper (A) and lower (B) profiles are shown on the display screen independently and point by point by superposing the template of each kind of tool (MC, MC') upon the template of the machined part (MP) at each of points $P_a$, $P_b$ calculated by interpolation, which points on the whole make up on the display screen the true profile resulting from the machining process.

3.- A system for the graphic display of lathe machined work, as in the above claims, characterised in that the angular position coordinate of the tool tip is reset taking away 360° from the value obtained in the sampling, when such value exceeds 360°.

FIG.-1

FIG.-2

FIG.-3

(a)

(b)

(c)

FIG.-4

FIG.-5

(a)

MC

MP

(b)

MC'

MP

(c)

FIG.-6